# FASCICULE DE BREVET EUROPEEN

(11) **EP 2 793 498 B1**
(45) Date de publication et mention de la délivrance du brevet: **16.08.2017**
(21) Numéro de dépôt: 14162864.4
(22) Date de dépôt: 31.03.2014
(51) Int. Cl.: G06F 21/77, H04W 12/12, H04L 29/06, G06Q 20/32, G06F 21/53, G06Q 20/36

(54) **Elément sécurisé pour terminal de télécommunications**
Sicheres Element für Telekommunikationsendgerät
Secure element for telecommunication terminal

(30) Priorité: 17.04.2013 FR 1353491
(43) Date de publication de la demande: 22.10.2014
(73) Titulaire: OBERTHUR TECHNOLOGIES, 92700 Colombes (FR)
(72) Inventeur: Bertin, Marc, 92700 Colombes (FR); Bousquet, Nicolas, 92700 Colombes (FR)
(74) Mandataire: Delumeau, François Guy

(56) Documents cités:
- US-A1- 2010 145 854
- US-A1- 2010 306 107
- US-A1- 2012 238 206

## Description

### Contexte technique

La divulgation qui fait l'objet du présent document s'inscrit dans le domaine des terminaux de télécommunications, pouvant communiquer via un réseau de télécommunications, comme un réseau de téléphonie mobile ou le réseau Internet.

Dans ce domaine, on connait des terminaux, mobiles ou fixes, disposant d'un élément sécurisé, ainsi que dans certains cas d'un environnement d'exécution sécurisé.

L'élément sécurisé est un ensemble électronique comprenant au moins un microprocesseur et une mémoire, et qui est conçu pour être sûr à la fois sur le plan logiciel et sur le plan matériel, notamment résistant aux attaques physiques. In est par exemple conforme à la norme Critères Communs ou à la norme FIPS 140. Il peut être amovible, par exemple quand il prend la forme d'une carte SIM ou constituer une partie non amovible du terminal (*embedded Secure Element par exemple*). Il a des capacités d'exécution de programmes spécifiques, et l'utilisateur n'a que peu d'accès direct à ses fonctions.

L'environnement d'exécution sécurisé, quand il est présent, forme une zone de confiance, propre au terminal, protégée sur le plan logiciel, puisque seules des applications provenant d'éditeurs accrédités, pour des fonctions demandant un niveau de sécurité important comme le paiement, la fourniture de contenu « premium », certifié ou garanti, ou la garantie de l'intégrité du terminal, y sont installées et exécutées. Ces fonctions définissent des services de confiance délivrés par un fournisseur à l'utilisateur du terminal. Ces fonctions sont assurées par des applications de confiance mises en oeuvre dans l'environnement sécurisé. L'environnement d'exécution sécurisé est en mesure de contrôler de manière sécurisée l'écran et l'interface utilisateur (clavier virtuel ou réel, par exemple) du terminal. Les applications de confiance sont obtenues auprès de fournisseurs (ou éditeurs) d'applications de confiance, aussi qualifiés de fournisseurs de services de confiance.

L'environnement sécurisé peut être accompagné sur le terminal par un environnement d'exécution polyvalent formant un environnement ouvert et multifonctionnel. Les applications exécutées dans l'environnement polyvalent peuvent faire appel aux applications exécutées dans l'environnement sécurisé.

Dans cette catégorie de terminaux on trouve des téléphones portables intelligents, des tablettes tactiles, des micro-ordinateurs, des systèmes intelligents autonomes, par exemple des ordinateurs de bord.

Les moyens matériel et logiciel de communication avec le réseau, qui peut utiliser une norme de téléphonie comme la norme GSM ou la norme 3G, ou une norme de communication locale comme le Wifi, ou encore le protocole IP, peuvent être mis en oeuvre dans le cadre de l'environnement d'exécution polyvalent, ou en dehors de celui-ci et à la fois en dehors de l'environnement d'exécution sécurisé.

Pour la gestion des applications de confiance mises en oeuvre dans l'environnement sécurisé, des serveurs de gestion de services de confiance sont connectés au réseau et mis en oeuvre par les fournisseurs des applications de confiance. Sur un terminal donné, une application de confiance peut être gérée en fonction de droits acquis par l'utilisateur du terminal ou d'autres événements, par une action distante du serveur de gestion de service de confiance, qui est interrogé par le terminal. Le serveur de gestion de service de confiance peut également tenir un historique d'informations relatives à l'utilisation des applications de confiance émises par l'éditeur, incluant éventuellement des informations sur le mode d'utilisation, comme la fréquence des décisions de paiement et le nombre de décisions de paiement dans une série d'utilisation. Comme le serveur de gestion est présent sur le réseau de communication, la gestion est effectuée à distance, et on parle de gestion OTI pour « over the Internet ». Si la communication par le réseau n'est pas disponible, ou n'est pas disponible avec un débit suffisant, la gestion est tenue en échec. De même si la communication par le réseau n'offre pas un niveau de confiance suffisante, par exemple parce qu'un opérateur du réseau n'est pas sûr, il peut être dangereux d'utiliser la gestion OTI.

US2010/0306107 décrit un mécanisme de gestion d'applications de paiement sur téléphone portable, qui limite le montant des transactions financières lorsque le réseau n'offre pas une connectivité suffisante. L'invention vise à proposer une nouvelle architecture de terminal, qui offre une gestion des applications de service de confiance même en cas de non disponibilité de la connexion réseau.

### Présentation de l'invention et de ses avantages

L'invention consiste en un terminal de télécommunications selon la revendication 1. Des modes de réalisation particuliers sont définis dans les revendications dépendantes.

Il est donc proposé un élément sécurisé pour terminal de télécommunications, comprenant des moyens de mise en oeuvre d'une application de gestion de service de confiance pour gérer au moins une application de confiance du terminal de télécommunications, ainsi qu'un terminal de télécommunications mettant en oeuvre l'application de confiance est mise en oeuvre et comprenant un élément sécurisé tel que présenté.

Grâce à ces principes, il est possible d'augmenter la sécurité et la fiabilité de la gestion des applications de confiance. La gestion peut être effectuée même en l'absence de connexion réseau, et elle peut être effectuée à l'abri d'éventuelles failles de sécurité présentes sur un réseau non contrôlé ou qui auraient atteint l'interface de communication avec le réseau du terminal notamment si celle-ci est mise en oeuvre en dehors d'un environnement d'exécution sécurisé, comme c'est souvent le cas.

Il est également proposé une fonction d'aiguillage qui oriente une requête de gestion de l'application de confiance vers l'application de gestion de service de confiance ou vers un serveur de gestion de service de confiance distant. Cette fonction d'aiguillage permet de choisir, selon la requête, selon l'état du terminal ou celui du réseau et selon des règles, si la gestion est effectuée en local ou de manière distante et donc d'augmenter la fiabilité et la sécurité du processus de gestion des applications de confiance.

L'application de gestion de services de confiance peut être configurée pour envoyer un rapport d'activité au serveur distant de gestion de service de confiance, ce qui participe là aussi à la fiabilité.

Le terminal peut disposer de moyens de communication réseau mis en oeuvre dans un environnement d'exécution distinct de l'environnement d'exécution dans lequel l'application de confiance est mise en oeuvre, ce qui confère un caractère de sécurité à l'environnement d'exécution dans lequel l'application de confiance est mise en oeuvre.

Il est également proposé un procédé de gestion d'une application de confiance mise en oeuvre par un terminal de télécommunications, comprenant une étape de réception par un élément sécurisé d'une requête en autorisation pour un acte de gestion, émise par un client gestionnaire d'applications de confiance du terminal, une étape de vérification par l'élément sécurisé d'une politique de sécurité relative à l'acte de gestion, une étape de transmission de l'élément sécurisé audit client gestionnaire d'applications de confiance d'une réponse, qui si elle est positive, comprend une clé cryptographique, et une étape de réalisation par ledit client gestionnaire d'applications de confiance de l'acte de gestion à l'aide de la clé cryptographique. Ce procédé qui concerne une réalisation de l'invention portant sur une gestion de type par exemple installation, activation, déblocage, mise à jour, personnalisation, suppression, désactivation ou blocage de l'application de confiance, offre les avantages évoqués ci-dessus, à savoir une amélioration de la fiabilité et de la sécurité de la gestion des applications de confiance.

Outre ces actes de gestion, l'invention vise aussi des actes de gestion de type collecte d'informations relatives à une activité de l'application de confiance. Elle vise aussi la personnalisation d'une application de confiance, notamment le système d'exploitation sécurisé lui-même, par l'utilisateur, dans le cadre d'un service de garantie de l'intégrité du terminal.

Dans un mode de réalisation particulier, l'environnement d'exécution dans lequel l'application de confiance est mise en oeuvre comprend un système d'exploitation de confiance sous la dépendance duquel l'application de confiance est exécutée, le terminal comprenant de plus un environnement d'exécution polyvalent comprenant un système d'exploitation polyvalent.

### Liste des figures

La figure 1 présente un exemple de système comprenant une gestion d'applications de confiance.
La figure 2 présente un mode de réalisation de la divulgation.
La figure 3 présente un autre mode de réalisation de la divulgation.
La figure 4 présente une mise en oeuvre des principes présentés dans la divulgation.
Les figures 5 et 6 présentent d'autres mises en oeuvre des principes présentés dans la divulgation.

### Description détaillée

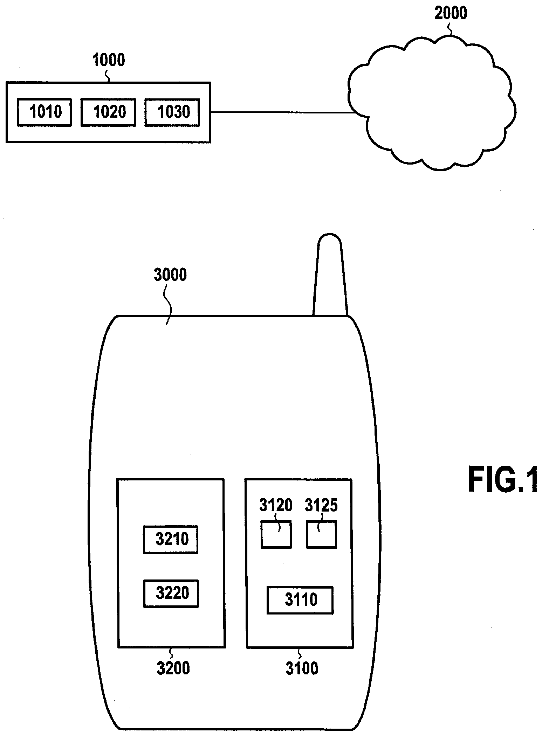

En **figure 1**, on a représenté un exemple de système comprenant une gestion de services de confiance fournis par un fournisseur d'applications de confiance. La gestion est effectuée par exemple sous le contrôle du fournisseur des applications de confiance, qui peut être un opérateur du réseau de télécommunications ou être une entité distincte de celui-ci. A chaque application de confiance est associé un service de confiance.

Un serveur de gestion 1000 du fournisseur des applications de confiance est accessible par un terminal 3000 via le réseau 2000, qui peut être un réseau de téléphonie mobile ou un réseau IP tel Internet ou un réseau mixte, tel qu'un réseau 4G. Etant accessible sur le réseau, le serveur 1000 est qualifié de serveur distant. Le serveur de gestion distant 1000 comprend des règles de sécurité 1010, des clés de cryptographie 1020, et éventuellement le code 1030 d'une application de confiance, pouvant être téléchargé sur le terminal 3000.

Le terminal 3000 est par exemple un téléphone mobile comme un *smarfphone*, ou bien une tablette équipée d'une interface *Wifi* ou d'une connexion filaire à Internet, ou un micro-ordinateur ou un système intelligent autonome. Il comprend, dans le mode de réalisation présenté, deux environnements d'exécution, l'un étant un environnement d'exécution sécurisé 3100 comprenant un système d'exploitation sécurisé, et l'autre un environnement d'exécution polyvalent 3200 comprenant un système d'exploitation polyvalent.

L'environnement d'exécution sécurisé 3100 peut être mis en oeuvre à l'aide d'un processeur sécurisé (non représenté), qui peut être un processeur dédié à cette tâche ou avoir d'autres fonctions, et d'une mémoire non-volatile réinscriptible sécurisée (non représentée), et est basé sur un système d'exploitation de confiance (non représenté). Ce système d'exploitation de confiance peut disposer d'un mécanisme de démarrage sécurisé qui vérifie que le terminal 3000 démarre dans un état de confiance, par exemple en vérifiant l'intégrité du code exécuté, notamment le code du système d'exploitation sécurisé 3100. Le système d'exploitation sécurisé 3100 démarre alors qu'aucun autre système d'exploitation n'a démarré préalablement. L'intégrité de la mémoire non-volatile réinscriptible sécurisée peut quant à elle être vérifiée par exemple à l'aide de techniques de chiffrement et de vérification d'empreinte (fonction de hachage). Grâce à l'environnement d'exécution sécurisé 3100, il est possible de stocker dans le terminal 3000 des données sensibles. Pour conserver le caractère sécurisé de l'environnement d'exécution sécurisé 3100, seules des applications de confiance, provenant de sources de confiance (ou certifiées) dont l'utilisateur n'a pas le contrôle, sont installées dans la mémoire de cet environnement et sont exécutées sous la dépendance de son système d'exploitation. Une protection logicielle et matérielle protège les applications de confiance des applications mises en oeuvre dans l'environnement polyvalent.

Par exemple une application de saisie de code confidentiel (qui peut être un code PIN, ou un code à usage temporaire) peut être installée dans l'environnement sécurisé et constitue une application de confiance.

Les applications de confiance mises en oeuvre dans l'environnement d'exécution sécurisé peuvent, dans certains modes de réalisation, avoir accès à toutes les fonctionnalités offertes par le processeur et la mémoire principale du terminal.

L'environnement d'exécution sécurisé 3100 comprend un client gestionnaire d'applications de confiance 3110, ainsi que les codes pour exécuter des applications de confiance 3120 et 3125, par exemple des applications pour service de paiement, pour service de gestion de contenu ou pour service de gestion de l'intégrité du terminal.

Le client gestionnaire d'applications de confiance 3110 constitue le relai du serveur de gestion distant 1000 auprès des applications de confiance 3120 et 3125.

L'environnement d'exécution polyvalent 3200 met en oeuvre une application 3210 pour environnement polyvalent, tel un navigateur Internet ou une application d'un autre type comme par exemple une application standard. Cette application peut avoir une icône associée dans l'affichage géré par l'environnement d'exécution polyvalent. L'environnement d'exécution polyvalent 3200 met en oeuvre également un émetteur/récepteur de téléphonie mobile 3220, par exemple GSM ou 3G, qui peut, en fonction du type de réseau, être remplacé ou complété par une interface de réseau IP.

Ainsi, les moyens de communication réseau 3220 pour établir une connexion avec le réseau de télécommunications 2000 sont, dans le mode de réalisation présenté, mis en oeuvre dans un environnement d'exécution distinct de l'environnement d'exécution sécurisé 3100, ce qui participe à la sécurisation de celui-ci.

Quand l'application 3210 pour environnement polyvalent demande à accéder aux services d'une application de confiance 3120, 3125 ou 1030, elle se met en relation avec le client gestionnaire d'applications de confiance 3110, qui examine, dans une liste dont chaque entrée porte sur une application de confiance exécutable dans l'environnement sécurisé 3100, quel est l'état ou le statut de l'application et détermine si elle peut être utilisée selon la demande de l'application 3210.

Si ce n'est pas le cas, le client gestionnaire 3110 s'adresse au serveur distant 1000 à travers l'interface 3220 exécutée dans l'environnement 3200, ainsi qu'à travers le réseau 2000, pour obtenir un acte de gestion par le fournisseur d'applications de confiance fournissant l'application concernée.

L'acte de gestion comprend la lecture des droits de l'utilisateur du terminal dans une base de droits, éventuellement la mise à disposition du terminal du code de l'application 1030, ou l'accord pour une activation ou un déblocage de l'application concernée, 1030, 3120 ou 3125. L'obtention d'un tel accord peut impliquer une vérification des règles 1010 et l'acte de gestion peut impliquer l'utilisation des clés de cryptographie 1020 pour l'activation de l'application. Une clé est transmise au client gestionnaire d'applications de confiance 3110 qui procède à un cryptage ou un décryptage avec la clé.

Un acte de gestion de l'application, effectué par le serveur distant gestionnaire de service de confiance 1000 quel que soit l'état de l'application de confiance concernée peut aussi consister en l'enregistrement de l'activité ou d'un type d'activité relative à l'application de confiance, quand celle-ci est activée, de manière à tenir un journal de transactions ou d'activité et à permettre au fournisseur d'applications de confiance d'effectuer des statistiques sur l'activité liée à l'application ou l'activité liée à l'utilisateur du terminal.

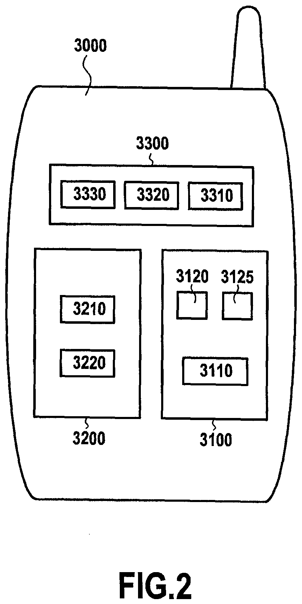

En **figure 2**, on a présenté un exemple de mise en oeuvre des principes de la présente divulgation. Certains des éléments de la figure 1 sont présents dans cet exemple et référencés avec les mêmes numéros de référence.

Le terminal 3000 comprend un élément sécurisé 3300, qui dispose des moyens pour exécuter certaines fonctions, notamment ici une application 3310 ou serveur local 3310 de gestion d'applications de confiance mises en oeuvre dans l'environnement sécurisé 3100. Ce serveur local 3310 est en mesure d'utiliser des règles de sécurité 3320 et des clés cryptographiques 3330 pour l'activation de l'application. Il peut s'agir d'un serveur Java s'exécutant sur une machine virtuelle Java ou d'un applet particulier, par exemple un applet Javacard.

L'élément sécurisé peut par exemple être une carte à microcircuit, SIM, UICC, eUICC (*embedded* UICC, ou carte à microcircuit enfouie ou embarquée), un Secure Element (SE) ou un *embedded-Secure Element* (eSE, ou *Secure Element* enfoui ou embarqué).

L'application de gestion 3310 ou serveur local 3310 remplace le serveur distant 1000 présenté en figure 1. Elle a été fournie par le fournisseur d'applications de confiance qui a édité les applications de confiance concernées. Le client gestionnaire d'applications de confiance 3110 constitue le relai de l'application de gestion 3310 auprès des applications de confiance 3120 et 3125.

Notamment le client gestionnaire 3110 s'adresse à l'application de gestion 3310 à travers un canal sécurisé, pour obtenir un acte de gestion par le fournisseur d'applications de confiance fournissant l'application concernée. Les échanges entre l'environnement sécurisé 3100 (incluant le client gestionnaire 3110) et l'élément sécurisé 3300 sont par exemple sous forme de commandes et de réponses APDU (*Application Protocole Data Unit*) conformes à la norme ISO 7816-4.

L'acte de gestion comprend, comme précédemment, si l'application de confiance n'est pas disponible dans l'environnement d'exécution sécurisé 3100, la mise à la disposition du terminal du code de l'application, qui est cette fois-ci obtenu d'une mémoire non volatile de l'élément sécurisé 3300 (non représentée), ou d'une carte mémoire amovible (non représentée) dont l'accès est sécurisé et accessible uniquement à l'élément sécurisé 3300.

L'acte de gestion peut aussi comprendre la fourniture d'un accord pour une activation ou un blocage de l'application concernée, 1030, 3120 ou 3125. L'obtention d'un tel accord peut impliquer une vérification des règles 3320 et la fourniture des clés de cryptographie 3330 ou d'un *token,* qui peut être une estampille temporelle, ou une combinaison des clés de cryptographie et d'un *token*. Ainsi, les droits sur l'application peuvent être permanents ou temporaires. Le client gestionnaire 3110 utilise une clé pour effectuer un cryptage ou un décryptage pour par exemple l'activation, le déblocage, la mise à jour, la personnalisation, la suppression, la désactivation ou le blocage de l'application de confiance.

Un acte de gestion de l'application, effectué par l'application de gestion d'applications de confiance 3310 peut aussi consister, comme précédemment, en l'enregistrement de l'activité ou d'un type d'activité relative à l'application de confiance de manière à tenir un journal de transactions ou d'activité et à permettre au fournisseur d'applications de confiance d'effectuer des statistiques sur l'activité liée à l'application ou l'activité liée à l'utilisateur du terminal.

L'acte de gestion peut aussi consister en la personnalisation d'une application de confiance, notamment le système d'exploitation sécurisé lui-même. Une telle personnalisation de l'environnement d'exécution sécurisé peut être mise en oeuvre au premier démarrage du terminal ou à l'issue de la détection de l'insertion d'un nouvel élément sécurisé amovible, ou lorsqu'une application de l'environnement polyvalent le demande. Une telle personnalisation de l'environnement polyvalent par une application de confiance gérée par une application de gestion de service de confiance constitue un service de garantie de l'intégrité du terminal, puisque l'utilisateur reconnaîtra ses paramètres de personnalisation, notamment un secret partagé entre lui et le système d'exploitation sécurisé, choisis pour lui garantir que son environnement d'exécution sécurisé n'a pas fait l'objet de modifications par une tierce personne ou une application malveillante. Le service de garantie de l'intégrité du terminal est fourni par l'autorité mettant en oeuvre l'application de gestion de service

De manière générale, l'application de gestion 3310 est chargée d'autoriser une installation, une activation, un déblocage une mise à jour ou une personnalisation de l'application de confiance, ou de commander une suppression, une désactivation ou un blocage de l'application de confiance ou de collecter des informations relatives à une activité de l'application de confiance.

L'élément sécurisé 3300 peut être configuré de plus pour transmettre à un serveur distant de gestion de service de confiance tel que le serveur distant 1000 présenté en figure 1 un rapport d'activité préparé par l'application de gestion de services de confiance 3310. Ce rapport peut inclure des informations sur les actes de gestion effectués sur les applications de confiance (liste des installations, activations, déblocages, mises à jour ou personnalisations, ainsi que des suppressions, désactivations et blocages, notamment). La transmission peut être effectuée de manière périodique, ou quand des circonstances particulières la déclenchent, comme par exemple la détection d'une bonne connexion au réseau.

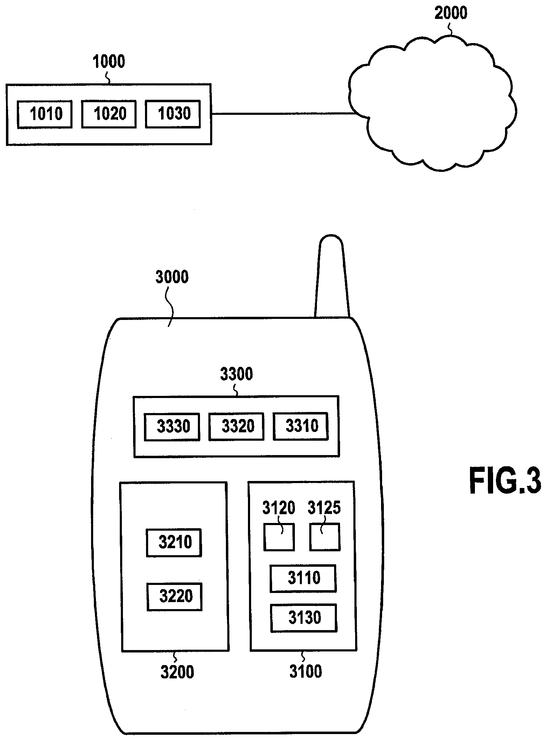

En **figure 3**, on a représenté un deuxième exemple de mise en oeuvre des principes de la présente divulgation. Certains des éléments des figures 1 et 2 sont présents dans cet exemple et référencés avec les mêmes numéros de référence.

L'environnement d'exécution sécurisé 3100 comprend de plus un module d'aiguillage 3130 qui met en communication le gestionnaire d'applications 3110 soit avec le serveur distant 1000 de gestion d'applications de confiance, accessible sur le réseau, via l'interface 3220 de communication avec le réseau, soit avec l'application locale 3310 de gestion d'applications de confiance, contenue dans l'élément sécurisé 3300.

Le choix de l'un ou de l'autre peut se faire sur différents critères et règles. La présence d'une connexion au réseau de bonne qualité, par exemple, peut amener le module d'aiguillage 3130 à toujours privilégier le serveur de gestion distant 1000 pour effectuer l'acte de gestion sur l'application de confiance.

La disponibilité, sur un réseau offrant une connexion de bonne qualité, d'un serveur de gestion du fournisseur d'applications de confiance éditant l'application de confiance concernée, peut être également un critère amenant le module d'aiguillage 3130 à toujours privilégier ce serveur de gestion 1000 distant. A l'inverse, si le serveur de gestion du fournisseur est indisponible ou si le réseau n'est pas accessible, c'est l'application de gestion locale 3310 qui est choisie pour effectuer l'acte de gestion sur l'application de confiance concernée.

Dans un contexte où plusieurs fournisseurs proposent plusieurs applications de gestion locales 3310 installées dans l'élément sécurisé, il peut être également décidé de toujours utiliser une application de gestion locale 3310, dès lors qu'une d'entre elles est associée avec le fournisseur d'applications de confiance éditant ou gérant l'application de confiance qui doit faire l'objet d'un acte de gestion. Ce n'est que si aucune application de gestion locale 3310 associée au fournisseur n'est présente dans l'élément sécurisé 3300 que le module d'aiguillage 3130 se tourne vers un serveur distant 1000 mis en place par le fournisseur.

Dans un autre mode de réalisation, si une application de gestion 3310 associée au fournisseur d'applications de confiance éditant l'application de confiance concernée est présente dans l'élément sécurisé 3300, le module d'aiguillage 3130 choisit de mettre en relation cette application de gestion 3310 avec le client gestionnaire d'applications 3110 même si la communication réseau est disponible et qu'un serveur de gestion associé au fournisseur est accessible sur le réseau. Ce mode de réalisation est particulièrement avantageux, car la communication entre le gestionnaire 3110 et l'application de gestion locale 3310 est sécurisée, car elle n'emprunte pas le réseau et ne transite pas par l'environnement d'exécution polyvalent 3200.

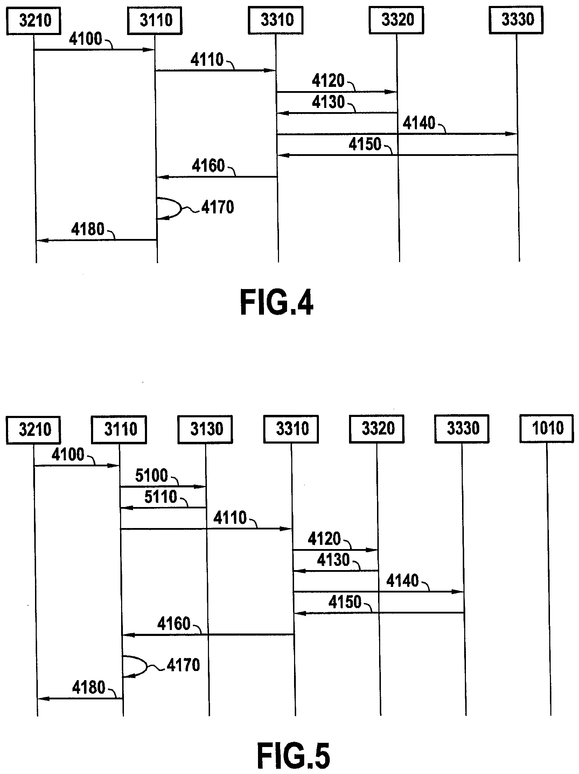

En **figure 4**, on présente les étapes d'un scénario d'utilisation du mode de réalisation de la figure 2. Au cours d'une étape 4100 l'application pour environnement polyvalent 3210 demande au client gestionnaire d'applications de confiance 3110 l'accès à une application de confiance. Celui-ci, constatant que l'application concernée n'est pas activée, effectue une demande d'activation à l'application de gestion 3310 de l'élément sécurisé, au cours d'une étape 4110. S'en suivent une étape 4120 de vérification de la politique d'autorisation, avec une réponse 4130 d'une application de la mémoire dans laquelle les règles de sécurité 3320 sont stockées, et une étape 4140 de demande de la clé cryptographique pour l'activation de l'application de confiance, qui est retournée par une réponse 4150 d'une application de la mémoire 3330 stockant ces clés. Ces informations ayant été obtenues par l'application de gestion 3310, celle-ci transmets les clés nécessaires à l'activation au client gestionnaire d'applications 3110 au cours d'une étape 4160. Celui-ci active l'application de confiance au cours d'une étape 4170 et la met en communication avec l'application 3210 pour environnement polyvalent au cours d'une étape 4180.

En **figure 5**, on a présenté les étapes d'un scénario d'utilisation du mode de réalisation de la figure 3. Certains des éléments de la figure 4 sont présents dans cet exemple et référencés avec les mêmes numéros de référence. Après que l'application 3210 pour environnement polyvalent a demandé au client gestionnaire d'applications 3110 d'être mise en relation avec une application de confiance au cours de l'étape 4100, le client gestionnaire d'applications 3110 interroge le module d'aiguillage 3130 au cours d'une étape 5100 pour savoir à qui s'adresser pour les opérations de gestion de l'application de confiance. Dans le scénario présenté, le module d'aiguillage décide d'orienter le client gestionnaire d'applications 3110 vers l'application de gestion locale 3310 et lui donne l'information sous la forme d'une réponse 5110, et les échanges ultérieurs sont similaires à ceux présentés en figure 4.

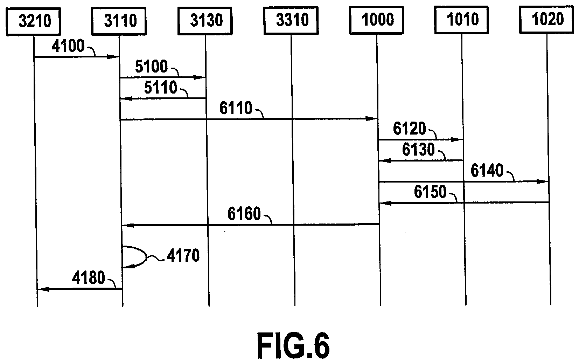

Alternativement, le module d'aiguillage aurait pu adresser le client gestionnaire d'applications 3110 vers le serveur distant 1010, comme cela est représenté en **figure 6**. Sur cette figure, certains des éléments des figures 4 et 5 sont présents et référencés avec les mêmes numéros de référence. Les étapes 4110 à 4160 sont remplacées par les étapes 6110 à 6160 et impliquent le serveur distant 1000 et ses mémoires 1010 et 1020.

Comme dans le mode de réalisation de la figure 2, l'élément sécurisé 3300 peut être configuré de plus pour transmettre à un serveur de gestion de service de confiance tel que le serveur distant 1000 un rapport d'activité préparé par l'application de gestion de service de confiance 3310 comme cela a été évoqué en relation avec la figure 2.

L'invention n'est pas limitée aux modes de réalisation présentés, mais s'étend à toutes les variantes dans le cadre de la portée des revendications.

Notamment, avec un élément sécurisé disposant d'une puissance de calcul suffisante, l'application de confiance peut être exécutée, dans une variante, dans l'élément sécurisé qui est, comme évoqué ci-dessus, lui-même chargé de la gestion de l'application de confiance. Il n'y a alors pas nécessairement de client gestionnaire d'applications de confiance 3110, ses fonctions pouvant être exécutées par l'application locale ou serveur local de gestion de services de confiance 3310, le client et le serveur local 3310 étant alors confondus.

L'application de confiance peut aussi, dans certaines variantes, être exécutée dans un environnement d'exécution non sécurisé, tel l'environnement polyvalent. Par ailleurs, le client gestionnaire d'applications 3110 peut gérer des applications qui ne sont pas des applications de confiance, en plus des applications de confiance. Par ailleurs, les moyens de communication avec le réseau peuvent ne pas être exécutés dans un environnement d'exécution polyvalent, mais dans leur propre environnement d'exécution spécifique, qui leur est alors dédié, ou dans l'environnement d'exécution exécutant l'application de confiance.

## Revendications

1. Terminal de télécommunications (3000) comprenant un élément sécurisé (3300) comprenant des moyens de mise en oeuvre d'une application de gestion de services de confiance (3310) pour gérer au moins une application de confiance (3120, 3125) mise en oeuvre par ledit terminal de télécommunications, l'élément sécurisé étant constitué d'une carte à microcircuit ou d'un *Secure Element*, dans lequel une fonction d'aiguillage (3130) oriente au moins une requête de gestion de ladite application de confiance (3120, 3125) vers ladite application de gestion de services de confiance (3310) ou vers un serveur de gestion de service de confiance distant (1000) sur un réseau de télécommunications (2000) auquel le terminal accède par des moyens de communication réseau (3220).

2. Terminal de télécommunications (3000) selon la revendication 1, dans lequel des moyens de communication réseau (3220) pour établir une connexion à un réseau de télécommunications (2000) sont mis en oeuvre dans un environnement d'exécution distinct de l'environnement d'exécution (3100) dans lequel l'application de confiance (3120, 3125) est mise en oeuvre.

3. Terminal de télécommunications (3000) selon la revendication 1 ou 2, dans lequel l'application de gestion de services de confiance (3310) est chargée d'autoriser une installation, une activation, un déblocage, une mise à jour ou une personnalisation de l'application de confiance (3120, 3125), ou de commander une suppression, une désactivation ou un blocage de l'application de confiance (3120, 3125).

4. Terminal de télécommunications (3000) selon l'une des revendications 1 à 3, dans lequel l'application de gestion de services de confiance (3310) est chargée de collecter des informations relatives à une activité de l'application de confiance (3120, 3125).

5. Terminal de télécommunications (3000) selon l'une des revendications 1 à 4, dans lequel l'environnement d'exécution (3100) dans lequel l'application de confiance (3120, 3125) est mise en oeuvre comprend un processeur sécurisé sur lequel est exécutée l'application de confiance (3120, 3125).

6. Terminal de télécommunications (3000) selon l'une des revendications 1 à 5, dans lequel l'environnement d'exécution (3100) dans lequel l'application de confiance (3120, 3125) est mise en oeuvre comprend une mémoire non-volatile réinscriptible sécurisée, dans laquelle des instructions pour l'exécution de l'application de confiance (3120, 3125) sont enregistrées.

7. Terminal de télécommunications (3000) selon l'une des revendications 1 à 6, dans lequel l'environnement d'exécution (3100) dans lequel l'application de confiance (3120, 3125) est mise en oeuvre comprend un système d'exploitation sous la dépendance duquel l'application de confiance (3120, 3125) est exécutée, dont le démarrage est sécurisé.

8. Terminal de télécommunications (3000) selon l'une des revendications 1 à 7, comprenant de plus un environnement d'exécution polyvalent (3200) qui met en oeuvre au moins une application (3210) apte à demander à accéder à l'application de confiance (3120, 3125).

9. Terminal de télécommunications (3000) selon l'une des revendications 1 à 8, dans lequel :
- l'environnement d'exécution (3100) dans lequel l'application de confiance (3120, 3125) est mise en oeuvre comprend un système d'exploitation de confiance sous la dépendance duquel l'application de confiance (3120, 3125) est exécutée,
le terminal comprenant de plus un environnement d'exécution polyvalent (3200) comprenant un système d'exploitation polyvalent.

10. Terminal de télécommunications (3000) selon l'une des revendications 1 à 9, dans lequel l'élément sécurisé (3300) est configuré pour transmettre à un serveur de gestion de service de confiance (1000) un rapport d'activité préparé par l'application de gestion de services de confiance (3310).

11. Terminal de télécommunications (3000) selon l'une des revendications 1 à 10, l'application de confiance (3120, 3125) étant une application pour service de paiement, service de fourniture de contenu ou service de garantie de l'intégrité du terminal.

12. Terminal de télécommunications (3000) selon l'une des revendications 1 à 11, l'application de confiance étant à mettre en oeuvre par un environnement d'exécution (3100) du terminal (3000) distinct de l'élément sécurisé (3300).

## Patentansprüche

1. Telekommunikationsendgerät (3000) mit einem gesicherten Element (3300), umfassend Mittel zur Durchführung einer Applikation zur Verwaltung von Vertrauensdiensten (3310), um wenigstens eine durch das Telekommunikationsendgerät durchgeführte Vertrauensapplikation (3120, 3125) zu verwalten, wobei das gesicherte Element von einer Mikrochip-Karte oder von einem *Secure Element* gebildet ist, wobei eine Weichenfunktion (3130) wenigstens eine Verwaltungsanfrage der Vertrauensapplikation (3120, 3125) zu der Applikation zur Verwaltung von Vertrauensdiensten (3310) oder zu einem entfernten Server zur Vertrauensdienstverwaltung (1000) an einem Telekommunikationsnetz (2000), auf das das Endgerät über Netzkommunikationsmittel (3220) zugreift, lenkt.

2. Telekommunikationsendgerät (3000) nach Anspruch 1, bei dem Netzkommunikationsmittel (3220) zum Herstellen einer Verbindung mit einem Telekommunikationsnetz (2000) in einer Ausführungsumgebung eingesetzt werden, welche von der Ausführungsumgebung (3100), in der die Vertrauensapplikation (3120, 3125) durchgeführt wird, getrennt ist.

3. Telekommunikationsendgerät (3000) nach Anspruch 1 oder 2, bei dem die Applikation zur Verwaltung von Vertrauensdiensten (3310) dafür zuständig ist, eine Installation, eine Aktivierung, eine Freigabe, eine Aktualisierung oder eine Personalisierung der Vertrauensapplikation (3120, 3125) zuzulassen oder ein Entfernen, eine Deaktivierung oder eine Sperrung der Vertrauensapplikation (3120, 3125) zu steuern.

4. Telekommunikationsendgerät (3000) nach einem der Ansprüche 1 bis 3, bei dem die Applikation zur Verwaltung von Vertrauensdiensten (3310) dafür zuständig ist, Informationen bezüglich einer Aktivität der Vertrauensapplikation (3120, 3125) zu sammeln.

5. Telekommunikationsendgerät (3000) nach einem der Ansprüche 1 bis 4, bei dem die Ausführungsumgebung (3100), in der die Vertrauensapplikation (3120, 3125) durchgeführt wird, einen gesicherten Prozessor umfasst, auf dem die Vertrauensapplikation (3120, 3125) ausgeführt wird.

6. Telekommunikationsendgerät (3000) nach einem der Ansprüche 1 bis 5, bei dem die Ausführungsumgebung (3100), in der die Vertrauensapplikation (3120, 3125) durchgeführt wird, einen gesicherten, wieder beschreibbaren, nicht flüchtigen Speicher umfasst, in dem Befehle für die Ausführung der Vertrauensapplikation (3120, 3125) gespeichert sind.

7. Telekommunikationsendgerät (3000) nach einem der Ansprüche 1 bis 6, bei dem die Ausführungsumgebung (3100), in der die Vertrauensapplikation (3120, 3125) durchgeführt wird, ein Betriebssystem umfasst, in Abhängigkeit von dem die Vertrauensapplikation (3120, 3125) ausgeführt wird, dessen Start gesichert ist.

8. Telekommunikationsendgerät (3000) nach einem der Ansprüche 1 bis 7, das zudem eine Mehrzweck-Ausführungsumgebung (3200) umfasst, die wenigstens eine Applikation (3210) durchführt, die geeignet ist, den Zugriff auf die Vertrauensapplikation (3120, 3125) anzufordern.

9. Telekommunikationsendgerät (3000) nach einem der Ansprüche 1 bis 8, bei dem:
- die Ausführungsumgebung (3100), in der die Vertrauensapplikation (3120, 3125) durchgeführt wird, ein Vertrauensbetriebssystem umfasst, in Abhängigkeit von dem die Vertrauensapplikation (3120, 3125) ausgeführt wird,
wobei das Endgerät zudem eine Mehrzweck-Ausführungsumgebung (3200) umfasst, die ein Mehrzweck-Betriebssystem umfasst.

10. Telekommunikationsendgerät (3000) nach einem der Ansprüche 1 bis 9, bei dem das gesicherte Element (3300) dazu ausgelegt ist, an einen Server zur Vertrauensdienstverwaltung (1000) einen durch die Applikation zur Verwaltung von Vertrauensdiensten (3310) erstellten Aktivitätsbericht zu übertragen.

11. Telekommunikationsendgerät (3000) nach einem der Ansprüche 1 bis 10, wobei die Vertrauensapplikation (3120, 3125) eine Applikation für Zahlungsdienst, Inhaltsbereitstellungsdienst oder Dienst zur Gewährleistung der Unversehrtheit des Endgerätes ist.

12. Telekommunikationsendgerät (3000) nach einem der Ansprüche 1 bis 11, wobei die Vertrauensapplikation durch eine Ausführungsumgebung (3100) des Endgerätes (3000), welche von dem gesicherten Element (3300) getrennt ist, durchzuführen ist.

## Claims

1. A telecommunications terminal (3000) including a secure element (3300) including means for performing a trusted services management application (3310) to manage at least one trusted application (3120, 3125) run by said telecommunications terminal, the secure element being constituted by a microcircuit card or by a *Secure Element*, wherein a switching function (3130) switches at least one request for management of said trusted application (3120, 3125) to said trusted services management application (3310) or to a remote trusted service manager server (1000) over a telecommunications network (2000) to which the terminal has access via network communication means (3220).

2. A telecommunications terminal (3000) according to claim 1, wherein network communications means (3220) for establishing a connection to a telecommunications network (2000) are performed in an execution environment distinct from the execution environment (3100) in which the trusted application (3120, 3125) is run.

3. A telecommunications terminal (3000) according to claim 1 or 2, wherein the trusted services management application (3310) is in charge of authorizing an installation, an activation, a deblocking operation, updating, or personalizing the trusted application (3120, 3125) or of causing the trusted application (3120, 3125) to be deleted, deactivated, or blocked.

4. A telecommunications terminal (3000) according to any one of claims 1 to 3, wherein the trusted services management application (3310) is in charge of selecting information about an activity of the trusted application (3120, 3125).

5. A telecommunications terminal (3000) according to any one of claims 1 to 4, wherein the execution environment (3100) in which the trusted application (3120, 3125) is run includes a secure processor on which the trusted application (3120, 3125) is executed.

6. A telecommunications terminal (3000) according to any one of claims 1 to 5, wherein the execution environment (3100) in which the trusted application (3120, 3125) is run includes a secure rewritable non-volatile memory storing instructions for executing the trusted application (3120, 3125).

7. A telecommunications terminal (3000) according to any one of claims 1 to 6, wherein the execution environment (3100) in which the trusted application (3120, 3125) is run includes an operating system under the control of which the trusted application (3120, 3125) is executed, with starting of the operating system being secure.

8. A telecommunications terminal (3000) according to any one of claims 1 to 7, further including a versatile execution environment (3200) running at least one application (3210) suitable for requesting access to the trusted application (3120, 3125).

9. A telecommunications terminal (3000) according to any one of claims 1 to 8, wherein:
- the execution environment (3100) in which the trusted application (3120, 3125) is run includes an operating system under the control of which the trusted application (3120, 3125) is executed,
the terminal further including a versatile execution environment (3200) having a versatile operating system.

10. A telecommunications terminal (3000) according to any one of claims 1 to 9, wherein the secure element is configured to transmit an activity report to a trusted service manager server (1000), which report is prepared by the trusted services management application (3310).

11. A telecommunications terminal (3000) according to any one of claims 1 to 10, wherein the trusted application (3120, 3125) is an application for a payment service, for a content supply service, or a service for guaranteeing the integrity of the terminal.

12. A telecommunications terminal (3000) according to any one of claims 1 to 11, wherein the trusted application is performed by an execution environment (3100) of the terminal (3000) that is distinct from the secure element (3300).
